# EUROPÄISCHE PATENTSCHRIFT

(11) **EP 1 955 093 B1**
(45) Veröffentlichungstag und Bekanntmachung des Hinweises auf die Patenterteilung: **22.01.2014**
(21) Anmeldenummer: 06818090.0
(22) Anmeldetag: 22.11.2006
(51) Int. Cl.: G01V 8/10

(54) **LICHTSCHRANKENGEHÄUSE, LICHTSCHRANKENELEMENT UND TORVORRICHTUNGEN**
LIGHT BARRIER HOUSING, LIGHT BARRIER ELEMENT AND GATE DEVICES
BOITIER DE BARRIERE LUMINEUSE, ELEMENT DE BARRIERE LUMINEUSE ET DISPOSITIFS PORTAILS

(30) Priorität: 30.11.2005 DE 202005018921 U; 02.03.2006 DE 202006003313 U
(43) Veröffentlichungstag der Anmeldung: 13.08.2008
(73) Patentinhaber: Hörmann KG Antriebstechnik, 33803 Steinhagen (DE)
(72) Erfinder: SANKE, Michael, 33378 Rheda-Wiedenbrück (DE); EUTENEUER, Patrick, 49326 Melle (DE); ZIESCHÈ, Franz, 33790 Halle (Westf.) (DE)
(74) Vertreter: Kastel, Stefan
(86) Internationale Anmeldenummer: PCT/DE2006/002061
(87) Internationale Veröffentlichungsnummer: WO 2007/062624

(56) Entgegenhaltungen:
- EP-A- 1 429 418
- DE-U1-202005 002 797
- US-A1- 2003 106 992

## Beschreibung

Die Erfindung betrifft ein Lichtschrankengehäuse mit den Merkmalen des Oberbegriffs des beigefügten Anspruchs 1, wie es aus der DE 20 2004 005 113 U1 bekannt ist. Die Erfindung betrifft außerdem ein Lichtschrankenelement mit einem solchen Lichtschrankengehäuse und eine ein solches Element aufweisende Lichtschranke für einen Gebäudeabschluss, wie insbesondere Tor. Die Erfindung betrifft weiter ein mit einer solchen Lichtschranke versehener Gebäudeabschluss, insbesondere Tor, sowie einen einer solchen Lichtschranke zugeordneten Torantrieb, gegebenenfalls mit Steuerung. Die Erfindung liegt somit insbesondere auf dem Gebiet der Überwachung von automatisch angetriebenen Gebäudeabschlüssen, wie insbesondere automatisierten Toren.

Die eingangs erwähnte DE 20 2004 005 113 U1 beschreibt eine Lichtschranke zur Überwachung eines automatisch angetriebenen Tores mit zwei eine Lichtschrankenstrecke in oder an einer Toröffnung errichtenden Lichtschrankenelementen, die beide in Zweidrahttechnik ausgebildet sind. Es sind demnach nur zwei Anschlussdrähte pro Lichtschrankenelement vorgesehen, die sowohl zur Signalleitung als auch Stromleitung ausreichend sind. Damit ist bereits gegenüber vorher bekannten Lichtschrankenvorrichtungen von Gebäudeabschlüssen mit wenigstens drei Anschlussdrähten der Montageaufwand erheblich verringert.

Aus der DE 20 2005 002 797 U1 ist ein Lichtschrankengehäuse für ein Lichtschrankenelement für eine Vielfachstrahl-Lichtschranke zur Überwachung eines gesamten Überwachungsbereich für eine maschinellen Vorrichtung, wie insbesondere für Bearbeitungsmaschinen oder Fördereinrichtungen bekannt, wobei das Lichtschrankengehäuse eine Steckaufnahme für ein elektrisches Steckelement zum Verbinden eines Kabels aufweist, mit dem das Lichtschrankenelement an eine Steuerungseinheit anschließbar ist.

Aus der EP 1 429 418 A1 ist ein elektrischer Steckverbinder bekannt, der ein Gehäuse aufweist, welches mit Steckkontakten auf eine elektrische Platine aufsetzbar ist. Der bekannte Steckverbinder weist eine Reihe von sechs manuell einfach mit dem Finger betätigbaren Klemmanschlüssen auf, an denen die freien abisolierten Enden eines Kabels in Aufnahmeöffnungen angeschlossen werden können.

Aus der US 2003/0106992 A1 ist ein Lichtschrankengehäuse für ein Lichtschrankenelement einer Vielfachstrahl-Lichtschranke einer Überwachungsvorrichtung für Maschinen wie Pressen oder Bearbeitungsmaschinen bekannt. Um mehrere solcher Lichtschrankengehäuse in Reihe anzuordnen, um so einen größeren Lichtvorhang zu bilden, ist auf der Vorderseite des Lichtschrankengehäuses eine Aufnahme für eine Steckverbindung zum Verbinden zweier benachbarter Lichtschrankenelemente vorgesehen.

Aufgabe der Erfindung ist es, den Montageaufwand für ein Lichtschrankenelement eines Gebäudeabschlusses weiter zu verringern.

Diese Aufgabe wird durch die Gegenstände der unabhängigen Ansprüche gelöst.

Vorteilhafte Ausgestaltungen der Erfindung sind Gegenstand der Unteransprüche.

Erfindungsgemäß werden für den Kabelanschluss eines Lichtschrankenelements Klemmanschlüsse verwendet, wie sie bisher nur bei Lautsprecheranschlüssen von Audioanlagen bekannt waren. Damit kann auch ein ungelernter Monteur die erfindungsgemäße Lichtschranke narrensicher und einfach anschließen.

Vorteilhafterweise werden für die weitere Kabelverlegung selbstklebende oder an anklipsbare Kabelklemmen eingesetzt, die ebenfalls sehr einfach und effektiv handhabbar sind.

Dadurch lassen sich gegenüber bisher bekannten Lichtschranken erhebliche Montagevereinfachungen erzielen. Vorkenntnisse in Elektrik sind nicht mehr erforderlich. Wer zuhause seine Audioanlage aufbauen und anschließen kann, kann auch das erfindungsgemäße Lichtschrankengehäuse sehr schnell anschließen. Da die Montagezeit bei bisherigen Lichtschranken ein erheblicher Kostenfaktor war, der mit der Erfindung entschärft ist, kann die Erfindung einen wesentlichen Beitrag zu einer breiteren Verbreitung dieser die Sicherheit von automatisch angetriebenen Toren wesentlich erhöhenden Lichtschranken leisten. Es ist so auch möglich, Lichtschrankentechnik ohne größere Mehrkosten auch für günstigere Torantriebssysteme, wie sie zum Beispiel derzeit bei Garagen von Einfamilienhäusern sehr beliebt sind, anzubieten.

Der Begriff "Lichtschranke" ist nicht auf die Verwendung von sichtbarem Licht beschränkt, es können sämtliche zur Erfassung von Objekten im Lichtweg zwischen zwei Lichfischrankenelementen - Sender und Empfänger oder Sende-Empfänger und Reflektor - geeigneten Strahlen, insbesondere Infrarotstrahlen, eingesetzt werden.

Gemäß einer vorteilhaften Ausgestaltung ist das Gehäuse der einzelnen Lichtschrankenelemente mit einer Rasteinrichtung versehen, mittels der das Gehäuse ohne Werkzeug einfach an Kantenausbildungen oder vorhandenen oder vorgefertigten Öffnungen an einem Torelement oder einer Haltevorrichtung anklipsbar ist.

Ausführungsbeispiele der Erfindung werden nachfolgend anhand der beigefügten Zeichnungen näher erläutert. Darin zeigt:
- Fig. 1: eine Vorderansicht eines Lichtschrankengehäuses eines Lichtschrankenelements;
- Fig. 2: eine Seitenansicht des Lichtschrankengehäuses;
- Fig. 3: eine Draufsicht des Lichtschrankengehäuses;
- Fig. 4: eine perspektivische Ansicht des Lichtschrankengehäuses von vorne, oben und der Seite gesehen;
- Fig. 5: eine perspektivische Ansicht des an einer Haltevorrichtung in Form eines Haltewinkels in einer ersten Montageposition befestigten Lichtschrankengehäuses, wobei diese erste Montageposition für eine Bodenmontage geeignet ist;
- Fig. 6: eine perspektivische Ansicht einer zweiten für eine Bodenmontage geeigneten Montageposition von Lichtschrankengehäuse und Haltewinkel;
- Fig. 7: eine perspektivische Ansicht einer dritten Montageposition von Lichtschrankengehäuse und Haltevorrichtung, die zur Befestigung an einer Torzarge eines Einblatt-Überkopftores geeignet ist;
- Fig. 8 und 9: zwei verschiedene Ausführungsformen von Kabelklemmen, mittels welchen Anschlusskabeln des Lichtschrankenelements einfach verlegbar sind;
- Fig. 10: eine perspektivische Explosionsansicht eines unteren Bereichs einer Torzarge eines Sektionaltores und eines Lichtschrankenelements in einer weiteren Ausführungsform mit Verkabelungselementen zur Verdeutlichung einer weiteren Möglichkeit der Lichtschrankenbefestigung, die wahlweise unmittelbar an der Torzarge oder an der Haltevorrichtung der voranstehenden Ausführung erfolgen kann;
- Fig. 11: eine perspektivische Ansicht der Anordnung von Fig. 10 aus einer anderen Richtung im zusammengesetzten Zustand zur Verdeutlichung der hierbei eingesetzten Rastverbindung;
- Fig. 12: die Anordnung der Fig. 10 und 11 von oben gesehen; und
- Fig. 13 bis 15: verschiedene Ansichten einer weiteren Ausführungsform eines Lichtschrankenelements, das mittels einer zweiten Ausführungsform einer Haltevorrichtung befestigbar ist.

Im folgenden werden nun anhand der Darstellung in den beigefügten Figuren drei Ausführungsformen eines Lichtschrankenelements 12, 212, 312 einer zum Überwachen des Torlauf eines mittels eines Torantriebes angetriebenen Tores dienenden Lichtschranke 14 näher beschrieben.

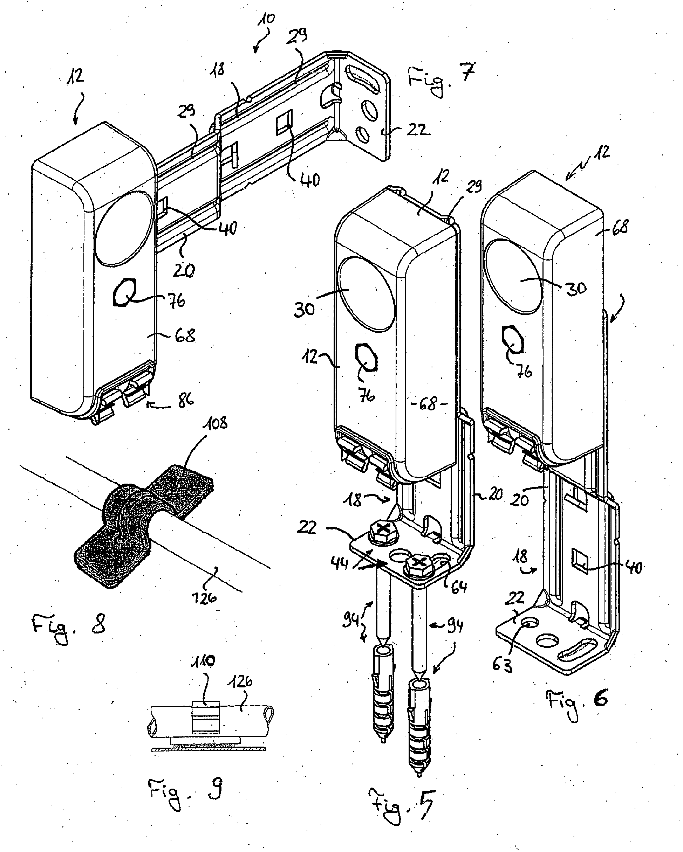

Das Lichtschrankenelement 12, 212, 312 sitzt in einem Lichtschrankengehäuse 68, 268, 368, welches in Vorderansicht eine Rechteckform aufweist. In einem zentralen Bereich ist bei einer ersten und dritten Ausführungsform des Lichtschrankengehäuses 68, 368 quer von der Vorderseite 70 bis zur Rückseite 72 durchgängig verlaufend eine Durchgangsöffnung 74 für eine Sechskantschraube 76 (siehe zum Beispiel die Fig. 5 bis 7) vorgesehen.

Die Durchgangsöffnung 74 kann zur Montage des Lichtschrankengehäuses 68, 368 mittels einer als Haltewinkel 18, 218 mit zwei Schenkeln 20 und 22 ausgebildeten Haltevorrichtung 10, 210 dienen, wie dies in den Figuren 5 bis 7 sowie 13 bis 15 dargestellt ist. Neben der dargestellten Montage des Lichtschrankengehäuses 68 mittels der Haltevorrichtung 10, 210 ist es aufgrund der Durchgangsöffnung 74 auch möglich, das Lichtschrankengehäuse 68 zum Beispiel unmittelbar an eine Wand zu montieren.

Bei der zweiten und dritten Ausführungsform des Lichtschrankengehäuses 268, 368 ist zur Montage an dem Haltewinkel 218 oder an einem Torelement, hier einer Torzarge 45 eines Sektionaltores, eine Rasteinrichtung 220, 320 vorgesehen, auf die weiter unten noch näher eingegangen wird.

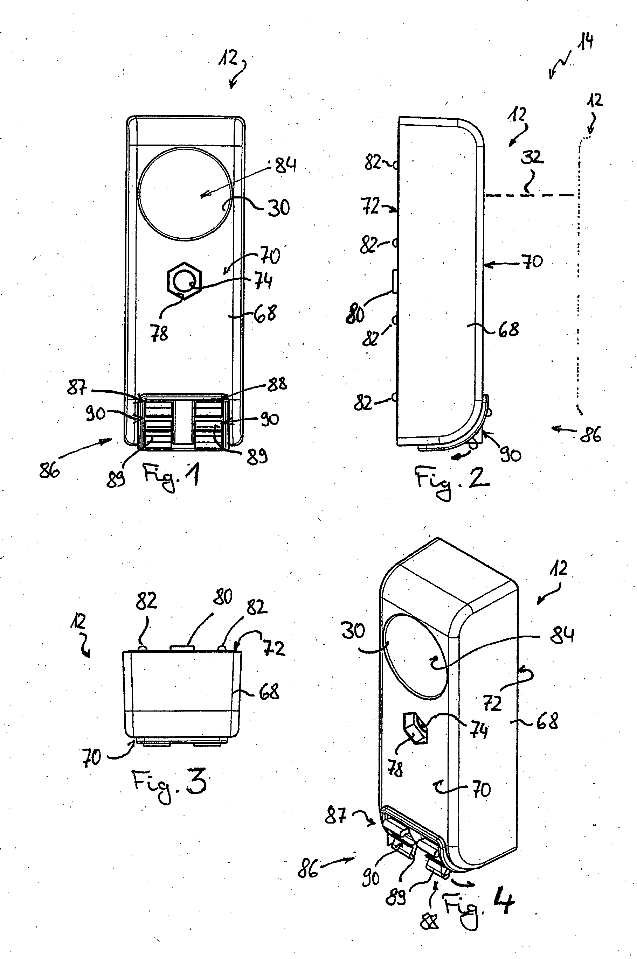

Wie aus den Fig. 1 - 4 ersichtlich, mündet die Durchgangsöffnung 74 an der Vorderseite 70 in eine Sechskantausnehmung 78 zwecks verdrehfester Aufnahme des Kopfes der Sechskantschraube 76.

An der Rückseite 72 mündet die Durchgangsöffnung 74 in einem quadratischen Vorsprung 80, der von der Rückseite 72 vorsteht und zur exakten Aufnahme in eine von mehreren wählbaren quadratischen Öffnungen 40 an der Haltevorrichtung 10 ausgebildet ist.

Weiter gibt es an der Rückseite 72 insgesamt acht halbkugelförmige Vorsprünge 82, welche bei Parallelausrichtung des Lichtschrankengehäuses 68 zu dem ersten Schenkel 20 in dort vorgesehene Verstärkungssicken 29 passend eingreifen. Die Verteilung und Anordnung der Vorsprünge 82 ist dabei derart, dass diejenigen der Vorsprünge 82, die nahe dem quadratischen Vorsprung 80 angeordnet sind, auch bei einer Ausrichtung des Lichtschrankengehäuses 68 quer zu dem ersten Schenkel 20 in die Sicken 29 eingreifen.

Durch die Vorsprung-Rücksprung-Ausbildung zwischen den Vorsprüngen 80, 82 und den Öffnungen bzw. Sicken 40, 29 lässt sich das Lichtschrankengehäuse 68, 268, 368 an dem Haltewinkel 18, 218 jeweils in insgesamt vier (und nicht mehr) wählbaren Orientierungen anordnen.

Das Lichtschrankengehäuse 68, 268, 368 ist vorzugsweise aus kostengünstigem, jedoch widerstandsfähigem und belastbarem Kunststoff ausgebildet.

In dem Lichtschrankengehäuse 68, 268, 368 ist zum Bilden des Lichtschrankenelements 12, 212, 312 jeweils eine fotoelektrische Einheit der Lichtschranke 14 vorgesehen. Dies kann ein Lichtsender oder ein Lichtempfänger sein, wobei zur Bildung der Lichtschranke 14 dann jeweils ein mit einem Sender versehenes Lichtschrankengehäuse 68, 268, 368 an der einen Torseite mittels der Haltevorrichtung 10, 210 zu befestigen ist und ein in dem Lichtschrankengehäuse 68, 268, 368 vorgesehener Empfänger an der anderen Seite der Toröffnung mit der Haltevorrichtung 10, 210 zu befestigen ist.

Weiter kann in dem Lichtschrankengehäuse 68, 268, 368 ein Sende-Empfänger vorgesehen sein, wobei am anderen Torwegende lediglich ein Reflektor angeordnet wird.

Vorzugsweise befindet sich in dem Lichtschrankengehäuse 68, 268, 368 als fotoelektrische Einheit zur Umwandlung von Lichtstrahlung in ein auswertbares Signal und umgekehrt eine Fotodiode 84 mit zugeordneter Elektronik (nicht dargestellt), die je nach Ansteuerung und Verschaltung als Sender oder als Empfänger dient. Der durch die Fotodiode 84 ausgesandte bzw. zu empfangende Lichtstrahl 32 kann durch einen an der Vorderseite 70 vorgesehenen für die jeweils verwendete Strahlung durchlässigen Bereich 30 durchtreten.

In dem dargestellten Beispiel ist das Lichtschrankenelement 12, 212, 312 in Zweidrahttechnik ausgeführt, wie dies grundsätzlich bekannt ist. Für nähere Einzelheiten in Bezug auf den inneren Aufbau des Lichtschrankenelementes 12, 212, 312 sowie die Wirkweise der Lichtschranke 14 in Bezug auf die Torsteuerung sowie deren Verschaltung mit dem hier nicht näher dargestellten Torantrieb wird ausdrücklich auf die DE 20 2004 005 113 U1 verwiesen. Es ist darin insbesondere beschrieben, dass und wie das Lichtschrankenelement 12, 212, 312 mit nur zwei Anschlussleitungen betrieben werden kann und bei etwa gleichem Aufbau je nach Ansteuerung bzw. Verschaltung als Sender oder als Empfänger betrieben werden kann.

Für eine einfache Montage der beiden Anschlussleitungen ist an dem Lichtschrankengehäuse 68, 268, 368, hier in einem unteren Bereich nahe der unteren Kante der Vorderseite 70 eine Anschlussvorrichtung in Form eines Kabelanschlusses 86 mit zwei Klemmanschlüssen 87, 88 vorgesehen, wie sie von Lautsprecheranschlüssen von Heimstereoanlagen her bekannt sind.

Die beiden Klemmanschlüsse 87, 88 weisen demnach ein durch eine Federspannung in Klemmlage vorgespanntes Kontaktelement oder Klemmelement 89 auf, welches mit einem Fingergriff bzw. einer Fingermulde 90 versehen ist, und so mittels des Fingers aus seiner Klemmlage heraus bewegt werden kann. Dabei öffnet sich ein Kontaktbereich, in den das jeweilige abisolierte Drahtende des Kabels hineingeführt werden kann. Lässt man dann das Klemmelement 89 los, so klemmt die Federvorspannung - hervorgerufen durch irgend ein beliebiges elastisches Element - Druck- oder Zugfeder, Torsionsfeder, Federklammer, Gummielement, usw. - das abisolierte Drahtende zwischen Metallflächen kontaktierend und festhaltend ein. Derartige Klemmanschlüsse sind als Lautsprecher-Klemmanschlüsse auf dem Elektronik-Markt erhältlich, so dass sich nähere Ausführungen erübrigen.

In den Fig. 5, 6 und 7 sind verschiedene Montagepositionen für eine Montage des Lichtschrankenelements 12 gemäß der ersten Ausführungsform an dem Boden oder an einer Torzarge dargestellt.

Die Fig. 5 zeigt dabei eine erste Montageposition, bei der das Lichtschrankengehäuse 68 längs zu dem ersten Schenkel 20 an einer mittleren quadratischen Öffnung 40 zwecks einer Bodenmontage befestigt ist. Dabei schließt das Lichtschrankengehäuse 68 oben mit dem ersten Schenkel 20 bündig ab. Das Lichtschrankengehäuse 68 ist einfach mit der in die Durchgangsöffnung 74 eingesetzten Sechskantschraube 76 befestigt, die an der Rückseite mit einer hier nicht näher dargestellten Mutter gesichert ist.

Für die Bodenbefestigung oder Befestigung an einer Wand sind zum Beispiel zwei Schraube-Dübel-Kombinationen 94 vorgesehen, mittels denen der Haltewinkel 18 an einer an dem zweiten Schenkel 22 vorgesehenen Boden- oder Wandbefestigungseinrichtung 44 angreifend in zwei entsprechend in den Boden gebohrten Löchern sicher befestigt werden kann.

Die Ausrichtung des durch die Fotodiode 84 auszusendenden oder zu empfangenden Lichtstrahles 32 kann wegen eines gebogenen Langloches 64 durch Verdrehung des Haltewinkels 18, 218 um eine Schraubbefestiger-Öffnung 63 bei eingesetzten Schraube-Dübelkombinationen 94 erfolgen.

In Fig. 6 ist eine zweite Montageposition dargestellt, welche mit der ersten Montageposition gemäß den Fig. 5 vergleichbar ist, wobei jedoch das Lichtschrankengehäuse 68 an einer weiter am freien Ende befindlichen quadratischen Öffnung 40 des ersten Schenkels 20 befestigt ist und somit höher positioniert ist, als bei der ersten Montageposition.

Auch bei einer in Fig. 7 gezeigten dritten Montageposition ist das Lichtschrankengehäuse 68 an dieser ersten quadratischen Öffnung 40 befestigt, jedoch diesmal quer zur Erstreckung des ersten Schenkels 20. Auf diese Weise kann der Haltewinkel 18, 218 zur Befestigung an einer vertikalen, etwa parallel zur Toröffnungsebene verlaufenden Fläche, beispielsweise einer Wandung oder insbesondere an einer Torzarge befestigt werden.

Zur Montage wird das Lichtschrankengehäuse 68 mittels der Sechskantschraube 76 und der Mutter in der jeweils gewünschten Montageposition befestigt. Anschließend muss nur noch das zweilitzige Kabel, das in den Fig. 8 und 9 bei 126 angedeutet ist an der Anschlusseinrichtung 86 mittels den Klemmanschlüssen 87 und 88 angeschlossen werden. Das andere Ende des zweilitzigen Kabels wird mit der (nicht dargestellten) Torantriebssteuerung verbunden. Das Kabel 126 kann mittels selbstklebender Kabelklemmen 108 und 110 (siehe die Fig. 8 oder 9) sauber in seinem Verlauf fixiert werden. Diese Kabelklemmen 108 oder 110 können der Lichtschranke 14 in ausreichender Anzahl beigepackt sein.

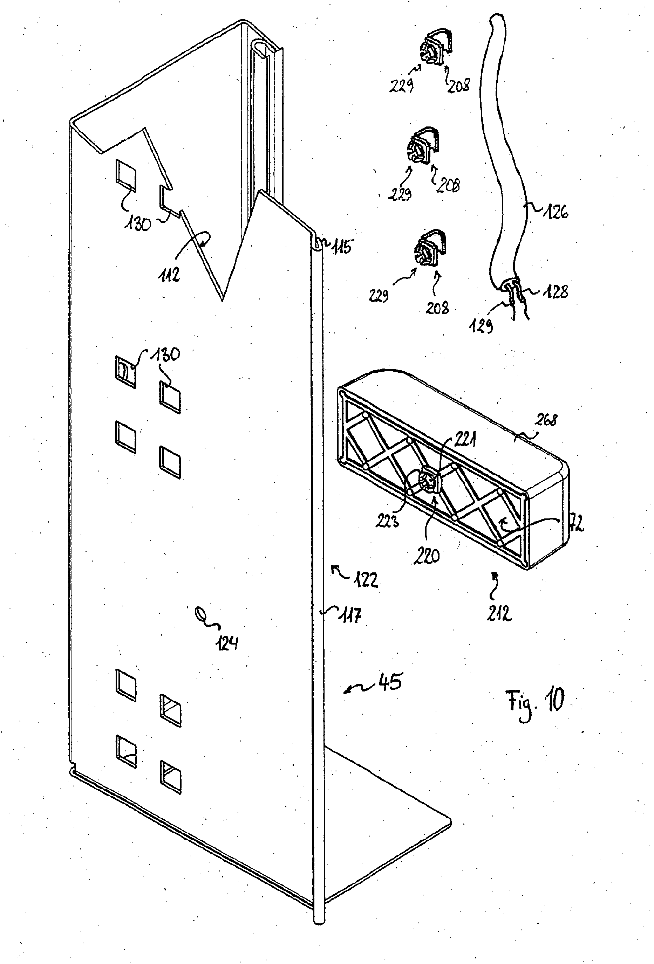

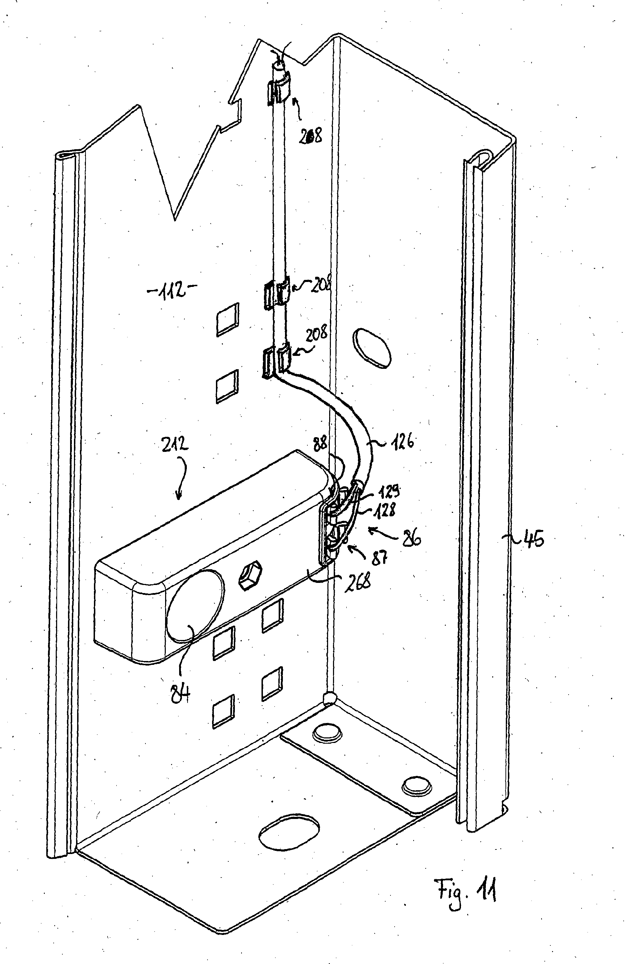

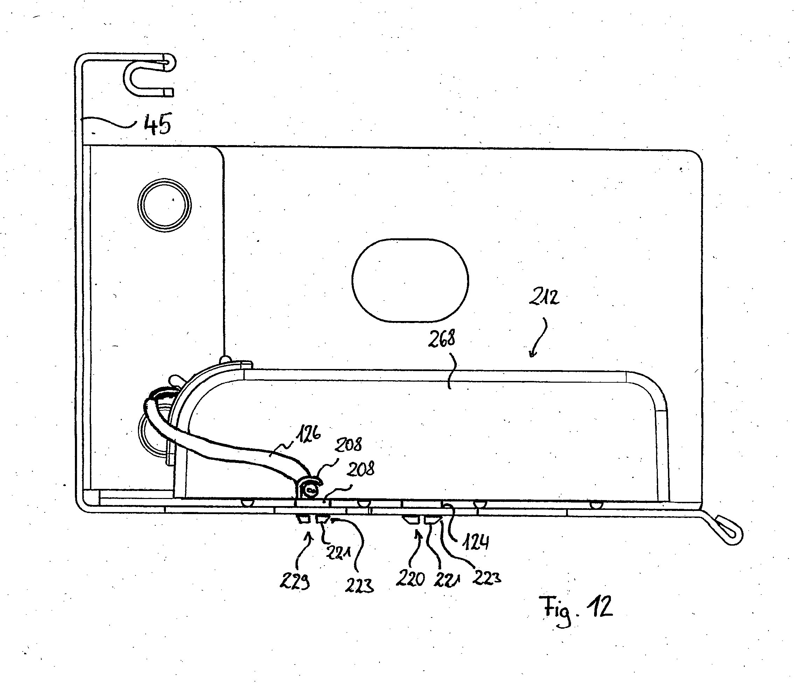

Die Fig. 10 bis 12 zeigen eine zweite Ausführungsform eines Lichtschrankenelements 212 am Beispiel einer unmittelbaren Befestigung an einer Torzarge 45 eines (nicht näher dargestellten) Sektionaltores. Dabei sind für gleiche oder entsprechende Teile die gleichen Bezugszeichen wie bei der ersten Ausführungsform verwendet.

Das Lichtschrankenelement 212 der zweiten Ausführungsform entspricht bis auf das Lichtschrankengehäuse 268 dem Lichtschrankenelement 12 der ersten Ausführungsform. Das Lichtschrankengehäuse 268 der zweiten Ausführungsform unterscheidet sich von dem Lichtschrankengehäuse 68 der ersten Ausführungsform allein durch eine erste Rasteinrichtung 220 an der Rückseite 72.

Die erste Rasteinrichtung 220 weist anstelle der Durchgangsöffnung 74 - und somit etwa mittig auf der Rückseite 71 - vier Rastzungen 221 auf, die sich jeweils diametral gegenüber stehen und auf ihren voneinder weg gerichteten Seiten je mit einer Rastnäse 223 versehen sind. Die Rastzungen 221 sind elastisch aufeinander zu bewegbar.

Damit kann die erste Rasteinrichtung 220 in eine zur Lichtschrankenbefestigung vorgefertigte Bohrung 124 eingeklipst werden, so dass eine unmittelbare Positionierung zum Beispiel an einer Innenseite einer L-Profil-Wandung 112 erfolgen kann. An der Innenseite der L-Profil-Wandung können in einer nicht näher dargestellten Ausgestaltung dieser Ausführungsform Positionierhilfen vorgesehen sein, um das Lichtschrankengehäuse 268 in vorgegeben wählbarer Orientierung zu positionieren. Diese Positionierhilfen können in Form von Anschlägen oder Ausnehmungen zum formschlüssigen Erfassung von Teilen des Lichtschrankengehäuses 268 vorgesehen sein.

Weiter sind in den Fig. 10 bis 12 alternative Ausführungen von Kabelklemmen 208 dargestellt, die mittels jeweils einer an der Kabelklemme 208 integral vorhandenen zweiten Rasteinrichtungen 229 in quadratische Öffnungen 130 an der Torzarge 45 verrastbar sind. Diese quadratischen Öffnungen 130 sind in regelmäßigen Abständen entlang der Torzarge 45 in der L-Profil-Wandung 112 vorgesehen. Auf diese Weise ist innerhalb des L-Profils der Torzarge 45 ein Weg zum geschützten und günstigen sowie einfachen Verlegen des Kabels 126 vorgegeben.

Die quadratischen Öffnungen 40 an dem Haltewinkel 18 haben in einer bevorzugten Ausführungsform die gleichen Abmessungen wie die quadratischen Öffnungen 130 an der Torzarge 45. Daher kann bei Bedarf eine der Kabelklemmen 208 auch in eine der quadratischen Öffnungen 40 am Haltwinkel eingeklipst werden, um das Kabel 126 im unmittelbaren Nahbereich des Lichtschrankenelements 12 oder 212 zu führen und zu fixieren. So kann das Kabel 126 zum Beispiel sicher hinter dem Haltewinkel 18 herum geführt werden, so dass- auch bei Auftreten von zum Beispiel durch Wind oder Erschütterungen bedingten Bewegungen - keine Störung des Lichtweges durch das Kabel 126 auftreten kann.

In den Fig. 10 bis 12 sind außerdem die zwei Litzen 128 und 129 des Kabels 126 und deren Anschluss an die Klemmanschlüsse 87 und 88 dargestellt.

An dem die Haltevorrichtung 10 gemäß der ersten Ausführungsform bildenden Haltewinkel 18 ist eine Schraubbefestiger-Öffnung 46 für die Sechskantschraube 76 in ihren Abmessungen vergleichbar zu der Bohrung 124 an der Torzarge 45 ausgeführt. Anstelle der in den Figuren 10 bis 12 zu Erläuterungszwecken dargestellten unmittelbaren Befestigung des Lichtschrankengehäuses 268 kann das Lichtschrankenelement 212 gemäß der zweiten Ausführungsform somit auch mittels der ersten Rasteinrichtung 220 an den Haltewinkel 18 angeklipst werden und dann im Bereich eines beliebigen Tores mittels des Haltewinkels 18 in wählbarer Anordnung befestigt werden.

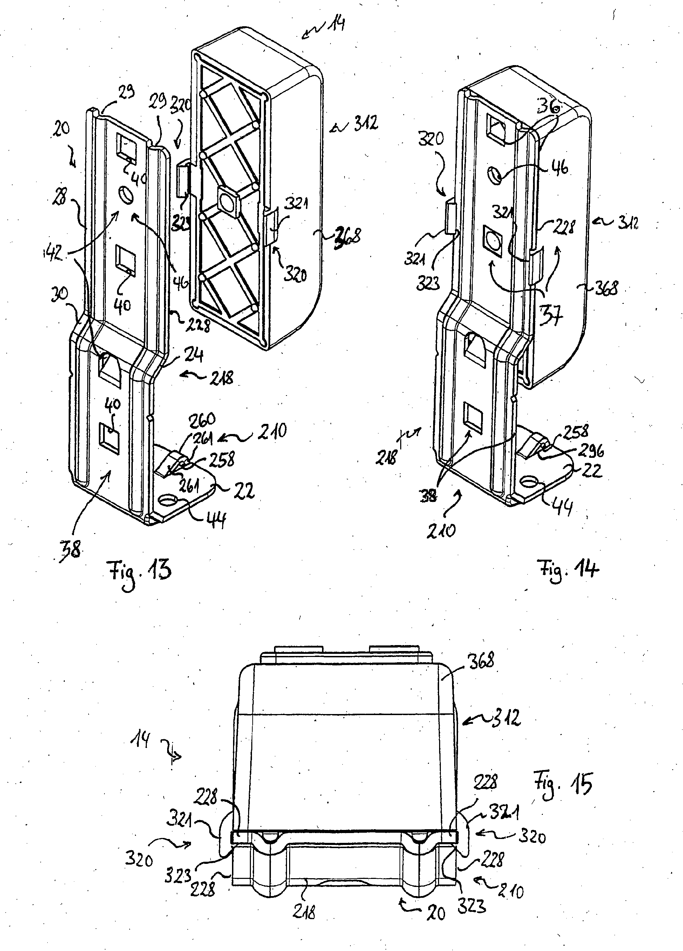

In den Fig. 13 bis 15 ist eine zweite Ausführungsform einer Haltevorrichtung 210 mit einem abgewandelten Haltewinkel 218 zur Befestigung eines . Lichtschrankenelements 12, 212, 312 zusammen mit einem Lichtschrankenelement 312 gemäß einer dritten Ausführungsform dargestellt. Dabei sind für entsprechende Teile die gleichen Bezugszeichen wie bei den zuvor erläuterten Ausführungsformen verwendet; und es wird für nähere Einzelheiten hierzu auf die obigen Ausführungen verwiesen.

Der Haltewinkel 218 gemäß der zweiten Ausführungsform unterscheidet sich von dem ersten Haltewinkel 18 der ersten Ausführungsform lediglich in der Ausgestaltung des zweiten Schenkels 22. An dem zweiten Schenkel 22 ist eine Lasche 260 vorgesehen, die im Bereich des freien Endes des zweiten Schenkels 22 angeordnet ist. Die Lasche 260 ist mit einem längeren mittleren Bereich 261 zunächst schräg auf die Seite des ersten Schenkel 20 zurückgebogen und am Endbereich wieder zurück zum zweiten Schenkel 22 hin gebogen so dass ein abgewinkeltes Ende 262 gebildet ist. Die Lasche 260 verläuft innerhalb einer ausgeschnittenen Ausnehmung 296 im freien Endbereich des zweiten Schenkels 22 und steht so nur nach innen zum ersten Schenkel 20 hin vor. Wird eine Anschlageinrichtung als Positionierhilfe zum Befestigen des Haltewinkels 218 an einem Torelement (nicht näher dargestellt) benötigt, so kann man die Lasche 260 hinunterdrücken, bis das abgebogene Ende 262 unterhalb des zweiten Schenkels 22 etwa rechtwinklig vorsteht. Dadurch ist an der Unterseite des zweiten Schenkels 22 eine Anschlageinrichtung 258 gebildet, eine Ausnehmung oder eine Kante eines Torelements, wie z.B. einer Schwingtorzarge (nicht dargestellt) erfassen kann.

Das Lichtschrankengehäuse 368 gemäß der dritten Ausführungsform ist wie das Lichtschrankengehäuse 68 der ersten Ausführungsform ausgebildet, wobei lediglich zusätzlich auf der Rückseite 72 eine dritte Rasteinrichtung 320 zum Einrasten an den langen Außenkanten 228 des Haltewinkels 18, 218 ausgebildet ist.

Die dritte Rasteinrichtung 320 weist mittig an den längeren Seitenkanten der Rückseite 72 des Lichtschrankengehäuses 368 jeweils eine Rastzunge 321 auf. Jede Rastzunge 321 weist auf der nach innen zu dem Lichtschrankengehäuse 368 gerichteten Seite eine Rastnase 323 auf, mit der die Außenkanten 228 des Haltewinkels 218 hintergreifbar sind. Hierzu können die Rastzungen 320 elastisch voneinander weg bewegt werden.

Gemäß einer nicht näher dargestellten weiteren Ausführungsform sind zwei der quadratischen Öffnungen 40 an dem Haltewinkel 18, 218 soweit voneinander entfernt und derart ausgebildet, dass die beiden Rastzungen 320 auch in den beiden quadratischen Öffnungen 40 eingreifen können und die dortigen Berandungen klemmend hintergreifen können. Dadurch kann das Lichtschrankengehäuse 368 wahlweise in einer mit dem Haltewinkel 18, 218 ausgerichteten Orientierung, wie in Fig. 13 bis 15 gezeigt, oder in einer zur Längserstreckung des Haltewinkels 18, 218 senkrechten Orientierung, wie etwa in Fig. 14 gezeigt mit dem Haltewinkel 18, 218 verrastet werden. Dabei sind Maßnahmen an dem Haltewinkel 18, 218 und/oder dem Lichtschrankengehäuse 368 getroffen, dass der Vorsprung 80 durch entsprechende Formgebung auch in der rechtwinkligen Ausrichtung in eine entsprechende Öffnung (nicht dargestellt) am Haltewinkel 18, 218 eingreifen kann.

Die Lichtschranke 14 ist in dem dargestellten Beispiel insbesondere als Beipack zu verschiedenen Torantrieben geeignet. Grundsätzlich kann jedem Torantriebstyp - Schlepptorantrieb, Wellentorantrieb oder Direktantrieb, Drehtorantrieb, Schiebetorantrieb, mitfahrender Antrieb.... - ein identischer Beipack beigefügt sein. Besonders vorteilhaft ist ein solcher Beipack bei Torantrieben geeignet, welche verschiedene Tortypen, zum Beispiel sowohl Sektionaltore als auch Schwingtore, antreiben können. Ein solcher Beipack umfasst zwei zum Bilden einer Lichtschranke 14 zueinander passende Lichtschrankenelemente 12 oder 212 oder 312, sowie zwei der Haltevorrichtungen 10, 210, sowie die verschiedenen Befestiger 76, 94, eine für verschiedene Einbausituationen ausreichend bemessene Länge des zweilitzigen Kabels 126 derart, dass beide Lichtschrankenelemente 12, 212, 312 angeschlossen werden können, sowie eine Vielzahl der selbstklebenden oder verklipsbaren Kabelklemmen 108, 110 bzw. 208.

Mit dem durch die Kabelklemmen 108, 110, 208 verlegbaren Kabel 126 lässt sich das Lichtschrankenelement 12 an eine zugehörige Versorgungs-, Steuerungs- und/oder Auswerteeinheit anschließen, also beispielsweise eine Torantriebssteuerung, wie sie in der DE 20 2004 005 113 U1 beschrieben und gezeigt ist. Auch wird für weitere Einzelheiten bezüglich des Torantriebes und des damit angetriebenen Tores auf diese Druckschrift verwiesen.

### Bezugszeichenliste

- 10: Haltevorrichtung
- 12: Lichtschrankenelement
- 14: Lichtschranke
- 18: Haltewinkel
- 20: erster Schenkel
- 22: zweiter Schenkel
- 29: Verstärkungssicken
- 30: strahlungsdurchlässiger Bereich
- 32: Lichtstrahl
- 40: quadratische Öffnung
- 44: Boden- oderWandbefestigungseinrichtung
- 45: Torzarge (Sektionaltor)
- 46: Schraubbefestiger-Öffnung
- 63: Schraubbefestiger-Öffnung
- 68: Lichtschrankengehäuse
- 70: Vorderseite
- 72: Rückseite
- 74: Durchgangsöffnung
- 76: Sechskantschraube
- 78: Sechskantausnehmung
- 80: quadratischer Vorsprung
- 82: buckelartiger Vorsprung
- 84: Fotodiode (fotoelektrische Einheit)
- 86: Kabelanschluss
- 87: erster Klemmanschluss
- 88: zweiter Klemmanschluss
- 94: Schraube-Dübel-Kombination
- 108: selbstklebende Kabelklemme
- 110: selbstklebende Kabelklemme
- 126: zweilitziges Kabel
- 128: erste Litze
- 129: zweite Litze
- 130: quadratische Öffnungen an Torzarge
- 208: Kabelklemme
- 210: Haltevorrichtung (zweite Ausführungsform)
- 212: Lichtschrankenelement (zweite Ausführungsform)
- 218: Haltewinkel (zweite Ausführungsform)
- 220: erste Rasteinrichtung
- 221: Rastzunge
- 223: Rastnase
- 228: Außenkanten des Haltewinkels
- 229: zweite Rasteinrichtung
- 258: Anschlageinrichtung
- 260: Lasche
- 261: mittlerer Bereich
- 262: abgewinkeltes Ende
- 296: ausgeschnittene Ausnehmung
- 268: Lichtschrankengehäuse (zweite Ausführungsform)
- 312: Lichtschrankenelement (dritte Ausführungsform
- 320: dritte Rasteinrichtung
- 321: Rastzunge
- 323: Rastnase
- 368: Lichtschrankengehäuse (dritte Ausführungsform)

## Patentansprüche

1. Lichtschrankengehäuse (68) für ein als Sende- und/oder als Empfangsmodul einer Lichtschranke zur Überwachung eines automatisch angetriebenen Gebäudeabschlusses ausgebildetes Lichtschrankenelement (12), mit
einer Vorderseite (70), die einen für die durch die Lichtschranke verwendete Strahlung durchlässigen Bereich (30) zum Eintritt und/oder Austritt des zur Überwachung dienenden Lichtschrankenstrahls (32) aufweist, und
einer der Vorderseite (70) entgegengerichteten Rückseite (72),
**dadurch gekennzeichnet,**
**dass** an dem Lichtschrankengehäuse (68) ein Kabelanschluss (86) zum Anschließen des Lichtschrankenelements (12) an eine Steuerungs- oder Auswerteeinheit vorgesehen ist,
**dass** der Kabelanschluss (86) wenigstens einen an dem Lichtschrankengehäuse (68) angeordneten Klemmanschluss (87, 88) aufweist,
**dass** der wenigstens eine Klemmanschluss (87, 88) mit einem federbelastet in eine Klemmstellung vorgespannten Klemmelement (89) versehen ist, welches manuell ohne Werkzeugeinsatz zum Einsetzen oder Entfernen eines endseitig abisolierten Anschlusskabelendes aus der Klemmstellung in eine Aufnahmestellung bewegbar ist,
wobei das Klemmelement (89) in der Aufnahmestellung eine Aufnahmeöffnung zum Einführen des Kabelendes freigibt, und
**dass** an dem Klemmelement (89) und/oder an einem Auflagebereich, gegen den das Klemmelement (89) in der Klemmstellung mit Federkraft anliegt, eine mit der fotoelektrischen Einheit elektrisch verbundene, aus einem elektrisch leitfähigen Material gebildete Kontaktfläche ausgebildet ist, und
**dass** der wenigstens eine Klemmanschluss (87, 88) an der Vorderseite (70) angeordnet ist.

2. Lichtschrankengehäuse nach Anspruch 1,
**dadurch gekennzeichnet,**
**dass** der Kabelanschluss (86) als Zweidrahtanschluss mit einem ersten und einem zweiten Klemmanschluss (87, 88) ausgebildet ist.

3. Lichtschrankengehäuse nach einem der voranstehenden Ansprüche,
**dadurch gekennzeichnet,**
**dass** der wenigstens eine Klemmanschluss (87, 88) an einem Kantenbereich, insbesondere an einem im bestimmungsgemäßen Gebrauch unten anzuordnenden Kantenbereich angeordnet ist.

4. Lichtschrankengehäuse nach einem der voranstehenden Ansprüche,
**dadurch gekennzeichnet,**
**dass** das wenigstens eine Klemmelement (89) mit einer durch eine Fingerspitze zwecks Bewegung des Klemmelements (89) erfassbaren Fingermulde (90) versehen ist.

5. Lichtschrankengehäuse nach einem der voranstehenden Ansprüche,
**dadurch gekennzeichnet,**
**dass** der von außen sichtbare Teil eines jeden von mehreren Klemmelementen (89) durch eine andersartige Markierung, insbesondere andersartige Einfärbung gekennzeichnet ist.

6. Lichtschrankengehäuse nach einem der voranstehenden Ansprüche,
**dadurch gekennzeichnet,**
**dass** das Lichtschrankengehäuse (68) eine von der Vorderseite (70) zu der Rückseite (72) durchlaufende Durchgangsöffnung (74) für einen Befestiger, insbesondere einen Schraubbefestiger (76), aufweist.

7. Lichtschrankengehäuse nach Anspruch 6,
**dadurch gekennzeichnet,**
**dass** die Durchgangsöffnung (74) an der Vorderseite (70) in eine zur verdrehfesten Erfassung eines Schraubenkopfes geeignete Ausnehmung (78) mündet.

8. Lichtschrankengehäuse nach einem der voranstehenden Ansprüche,
**dadurch gekennzeichnet,**
**dass** an der Rückseite (72) eine Vorsprungausbildung (80, 82) und/oder Rücksprungausbildung als Positionierhilfe für eine mit einer vorbestimmten Orientierung erfolgende Montage des Lichtschrankengehäuses (68) ausgebildet ist.

9. Lichtschrankengehäuse nach einem der voranstehenden Ansprüche,
**dadurch gekennzeichnet,**
**dass** zur Befestigung des Lichtschrankengehäuses unmittelbar an einem Element eines Tores oder an einer Haltevorrichtung eine Rasteinrichtung (220; 320) zum Hintergreifen einer Ausnehmung (124, 46) oder einer Kantenausbildung (228) an dem Tor oder an der Haltevorrichtung (10; 210; 310) vorgesehen ist.

10. Lichtschrankengehäuse nach Anspruch 9,
**dadurch gekennzeichnet,**
**dass** die Rasteinrichtung an der Rückseite (72) vorgesehen ist.

11. Lichtschrankengehäuse nach einem der Ansprüche 9 oder 10,
**dadurch gekennzeichnet,**
**dass** die Rasteinrichtung (220) mehrere Rastzungen (221) aufweist, die zum Eingreifen in eine kreisrunde oder rechteckige Öffnung (124; 46) am Tor oder an der Haltevorrichtung ausgebildet sind, an voneinander weg gerichteten Seiten jeweils mit wenigstens einer Rastnase (223) ausgebildet sind und zum Einrasten elastisch aufeinander zu bewegbar sind.

12. Lichtschrankengehäuse nach Anspruch 11,
**dadurch gekennzeichnet,**
**dass** die Rasteinrichtung etwa mittig auf der Rückseite angeordnet ist, wobei die Rastzungen mit Abstand von Berandungskanten der Rückseite angeordnet sind.

13. Lichtschrankengehäuse nach einem der Ansprüche 9 oder 10,
**dadurch gekennzeichnet,**
**dass** die Rasteinrichtung (320) mehrere Rastzungen (321) aufweist, die zum Umfassen zweier voneinander weg gerichteter, im wesentlichen paralleler Kanten (228) am Tor oder an der Haltevorrichtung ausgebildet sind, an zueinander gerichteten Seiten jeweils mit wenigstens einer Rastnase (321) ausgebildet sind und zum Einrasten elastisch voneinander weg bewegbar sind.

14. Lichtschrankengehäuse nach Anspruch 13,
**dadurch gekennzeichnet,**
**dass** die Rastzungen im Nahbereich von Berandungskanten der Rückseite (72) angeordnet sind.

15. Lichtschrankenelement (12), ausgebildet als Sende- und/oder als Empfangsmodul einer Lichtschranke zur Überwachung eines automatisch angetriebenen Gebäudeabschlusses, mit
einer fotoelektrischen Einheit (84) zur Umwandlung von elektromagnetischer Strahlung in ein elektronisch verwertbares Signal und/oder umgekehrt, **gekennzeichnet durch** ein Lichtschrankengehäuse (68) nach einem der voranstehenden Ansprüche, in dem die fotoelektrische Einheit (84) untergebracht ist, wobei die fotoelektrische Einheit mittels des an dem Lichtschrankengehäuse (68) angeordneten Kabelanschlusses (86) an eine Versorgungs-, Steuerungs- und/oder Auswerteeinheit anschließbar ist.

16. Lichtschrankenelement nach Anspruch 15,
**dadurch gekennzeichnet,**
**dass** es in Zweidrahttechnik ausgebildet ist und dass der Kabelanschluss als Zweidrahtanschluss mit zweien der Klemmanschlüsse (87, 88) ausgebildet ist.

17. Lichtschranke mit zwei eine Lichtschrankenstrecke bildenden Lichtschrankenelementen (12), von denen wenigstens eines gemäß den Ansprüchen 15 oder 16 ausgebildet ist.

18. Lichtschranke nach Anspruch 17,
**gekennzeichnet durch** ein, vorzugsweise zweilitziges, Kabel (126) und **durch** eine Anzahl selbstklebender oder je wenigstens ein Element einer Rastverbindung aufweisende Kabelklemmen (108, 110,) zur Führung des Kabels von dem Lichtschrankenelement zur Versorgungs-, Steuerungs- und/oder Auswerteeinheit.

19. **Durch** einen Torantrieb angetriebenes Tor, dessen Torlauf mittels einer Lichtschranke gemäß Anspruch 17 oder 18 überwacht ist.

20. Torantriebsvorrichtung zum motorischen Antreiben eines Tores, insbesondere eines Garagen- oder Industrietores oder Einfahrtstors, **gekennzeichnet durch** wenigstens ein Lichtschrankengehäuse (68) nach einem der Ansprüche 1 bis 15.

21. Torantriebsvorrichtung nach Anspruch 20,
**gekennzeichnet durch** eine Lichtschranke mit einem Lichtschrankenelement (12) nach einem der Ansprüche 15 oder 16, um ein sich im Torweg befindliches Hindernis zu erfassen und bei Erfassung eines Hindernisses einen Torlauf zu stoppen und/oder zu reversieren.

## Claims

1. Light barrier housing (68) for a light barrier element (12) embodied as a transmitting and/or receiving module of a light barrier for monitoring an automatically operated building closure, having
a front side (70) which comprises a region (30) that is permeable to the radiation used by the light barrier, for the entry and/or exit of the light barrier beam (32) used for the monitoring, and
a rear side (72) oppositely directed to the front side (70),
**characterised in that**
on the light barrier housing (68) is provided a cable connection (86) for connecting the light barrier element (12) to a control or evaluating unit,
the cable connection (86) comprises at least one clamping connection (87, 88) disposed on the light barrier housing (68),
the at least one clamping connection (87, 88) is provided with a clamping element (89) biased into a clamping position by spring-loading, which can be moved manually, without the use of tools, from the clamping position into a receiving position, in order to insert or remove a terminally insulated end of a connecting cable,
the clamping element (89) in the receiving position opening up a receiving opening for the insertion of the cable end, and
a contact surface electrically connected to the photoelectric unit and formed from an electrically conductive material is embodied on the clamping element (89) and/or on a support region against which the clamping element (89) abuts with spring force in the clamping position, and
the at least one clamping connection (87, 88) is arranged on the front side (70).

2. Light barrier housing according to claim 1, **characterised in that** the cable connection (86) is embodied as a two-wire connection having a first and a second clamping connection (87, 88).

3. Light barrier housing according to one of the preceding claims, **characterised in that** the at least one clamping connection (87, 88) is arranged on an edge region, particularly on an edge region that is to be disposed underneath during normal use.

4. Light barrier housing according to one of the preceding claims, **characterised in that** the at least one clamping element (89) is provided with a finger recess (90) that can be engaged by a finger tip in order to move the clamping element (89).

5. Light barrier housing according to one of the preceding claims, **characterised in that** the part of each of several clamping elements (89) that can be seen from the outside is distinguished by a different kind of marking, particularly a different colour.

6. Light barrier housing according to one of the preceding claims, **characterised in that** the light barrier housing (68) comprises a through-opening (74) extending from the front side (70) through to the rear side (72) for a fastener, particularly a screw fastener (76).

7. Light barrier housing according to claim 6, **characterised in that** the through-opening (74) on the front side (70) opens into a recess (78) which is suitable for the engagement of a screw head for co-rotation therewith.

8. Light barrier housing according to one of the preceding claims, **characterised in that** on the rear side (72) is formed a projecting configuration (80, 82) and/or recessed configuration as a positioning aid for the installation of the light barrier housing (68) in a predetermined orientation.

9. Light barrier housing according to one of the preceding claims, **characterised in that** for attaching the light barrier housing directly to an element of a gate or to a securing means, a latching device (220; 320) is provided for engaging behind a recess (124, 46) or an edge configuration (228) on the gate or on the securing means (10; 210; 310).

10. Light barrier housing according to claim 9, **characterised in that** the latching device is provided on the rear side (72).

11. Light barrier housing according to one of claims 9 or 10, **characterised in that** the latching device (220) comprises a plurality of latching tongues (221) which are embodied to engage in a circular or rectangular opening (124; 46) on the gate or on the securing device, are each configured with at least one latching tab (223) on sides directed away from one another and are elastically movable towards one another for latching engagement.

12. Light barrier housing according to claim 11, **characterised in that** the latching device is arranged substantially centrally on the rear side, the latching tongues being arranged at a spacing from the peripheral edges of the rear side.

13. Light barrier housing according to one of claims 9 or 10, **characterised in that** the latching device (320) comprises a plurality of latching tongues (321) which are embodied to encompass two substantially parallel edges (228) directed away from one another on the gate or on the securing means, are each configured with at least one latching tab (321) on sides directed towards one another and are elastically movable away from one another for latching engagement.

14. Light barrier housing according to claim 13, **characterised in that** the latching tongues are arranged in the vicinity of peripheral edges of the rear side (72).

15. Light barrier element (12) embodied as a transmitting and/or receiving module of a light barrier for monitoring an automatically operated building closure,
having a photoelectric unit (84) for converting electromagnetic radiation into an electronically usable signal and/or *vice versa,*
**characterised by** a light barrier housing (68) according to one of the preceding claims, in which the photoelectric unit (84) is accommodated, the photoelectric unit being connectable to a supply, control and/or evaluating unit by means of the cable connection (86) arranged on the light barrier housing (68).

16. Light barrier element according to claim 15, **characterised in that** it is configured according to two-wire technology and the cable connection is embodied as a two-wire connection with two of the clamping connections (87, 88).

17. Light barrier having two light barrier elements (12) forming a light barrier system, at least one of them being configured according to claim 15 or 16.

18. Light barrier according to claim 17, **characterised by** a preferably two-stranded cable (126) and by a number of cable clips (108, 110) that are self-adhesive or each comprise at least one element of a latching connection, for guiding the cable from the light barrier element to the supply, control and/or evaluating unit.

19. Gate operated by a gate drive, the movement of which is monitored by a light barrier according to claim 17 or 18.

20. Gate drive apparatus for motorised operation of a gate, particularly a garage or industrial gate or entrance gate, **characterised by** at least one light barrier housing (68) according to one of claims 1 to 15.

21. Gate drive apparatus according to claim 20, **characterised by** a light barrier having a light barrier element (12) according to one of claims 15 or 16, for detecting an obstacle in the path of the gate and, in the event that an obstacle is found, stopping and/or reversing the movement of the gate.

## Revendications

1. Boitier de barrière lumineuse (68) destiné à un élément de barrière lumineuse (12) réalisé sous la forme d'un module d'émission et/ou de réception d'une barrière lumineuse pour permettre de surveiller une fermeture de bâtiment à actionnement automatique, comportant :
une face avant (70) qui comporte une zone (30) perméable au rayonnement utilisé pour la barrière lumineuse pour permettre l'entrée et/ou la sortie du faisceau de barrière lumineuse (32) servant à la surveillance, et
une face arrière (72) opposée à la face avant (70),
**caractérisé en ce que**
sur le boitier de la barrière lumineuse (68) il est prévu un branchement de câbles (86) pour permettre de raccorder l'élément de barrière lumineuse (12) à une unité de commande ou d'exploitation,
le branchement de câbles (86) comporte au moins un branchement par serrage (87, 88) monté sur le boitier de la barrière lumineuse (68),
le branchement par serrage (87, 88) est équipé d'un élément de serrage (89) élastiquement précontraint dans une position de serrage, qui est peut être déplacé manuellement, sans mise en oeuvre d'un outil pour positionner ou extraire une extrémité de câble de raccordement isolée à son extrémité de la position de serrage dans une position de réception,
l'élément de serrage (89) libère dans la position de réception une ouverture de réception pour permettre l'introduction de l'extrémité du câble,
sur l'élément de serrage (89) et/ou dans une zone d'appui contre laquelle s'applique élastiquement l'élément de serrage (89) dans la position de serrage, est formée une surface de contact réalisée en un matériau électriquement conducteur et reliée électriquement à l'unité photoélectrique, et
le branchement de serrage (87, 88) est situé sur la face avant (70).

2. Boitier de barrière lumineuse conforme à la revendication 1, **caractérisé en ce que**
le branchement de câbles (88) est réalisé sous la forme d'un branchement à deux fils comportant un premier et un second branchement de serrage (87, 88).

3. Boitier de barrière lumineuse conforme à l'une des revendications précédentes,
**caractérisé en ce que**
le branchement de serrage (87, 88) est situé sur une zone d'arête, en particulier sur une zone d'arête devant être positionnée vers le bas lors de l'utilisation.

4. Boitier de barrière lumineuse conforme à l'une des revendications précédentes,
**caractérisé en ce que**
l'élément de serrage (89) est équipé d'une cavité pour les doigts (90) pouvant être saisie par la pointe d'un doigt pour permettre le déplacement de l'élément de serrage (89).

5. Boitier de barrière lumineuse conforme à l'une des revendications précédentes,
**caractérisé en ce que**
la partie visible de l'extérieur de chacun des éléments de serrage (89) est **caractérisée par** un marquage différent, en particulier une couleur différente.

6. Boitier de barrière lumineuse conforme à l'une des revendications précédentes,
**caractérisé en ce que**
le boitier de barrière lumineuse (68) comporte une ouverture de passage traversante (74) allant de la face avant (70) à la face arrière (72) pour un élément de fixation, en particulier un élément de fixation par vissage (76).

7. Boitier de barrière lumineuse conforme à la revendication 6,
**caractérisé en ce que**
l'ouverture traversante (74) débouche sur la face avant (70) dans un évidement (78) adapté à la saisie fixe en rotation d'une tête de vis.

8. Boitier de barrière lumineuse conforme à l'une des revendications précédentes,
**caractérisé en ce que**
sur la face arrière (72) est réalisée une saillie (80, 82) et/ou un retrait faisant office d'aide de positionnement lors d'un montage du boitier de barrière lumineuse (68) effectué avec une orientation prédéfinie.

9. Boitier de barrière lumineuse conforme à l'une des revendications précédentes,
**caractérisé en ce que**
pour permettre la fixation du boitier de barrière lumineuse directement sur un élément d'un portail ou sur un dispositif de retenue il est prévu un dispositif d'encliquetage (220, 320) destiné à venir en prise par l'arrière dans un évidement (124, 46) ou une arête (228) du portail ou du dispositif de retenue (10, 210, 310).

10. Boitier de barrière lumineuse conforme à la revendication 9,
**caractérisé en ce que**
le dispositif d'encliquetage est situé sur la face arrière (72).

11. Boitier de barrière lumineuse conforme à l'une des revendications 9 et 10,
**caractérisé en ce que**
le dispositif d'encliquetage (220) comporte plusieurs languettes d'encliquetage (221) qui sont réalisées pour venir en prise dans une ouverture circulaire ou rectangulaire (124, 46) du portail ou du dispositif de retenue, sur les faces opposées desquelles est respectivement réalisé au moins un talon d'encliquetage (223) et qui sont mobiles élastiquement les unes par rapport aux autres pour permettre l'encliquetage.

12. Boitier de barrière lumineuse conforme à la revendication 11,
**caractérisé en ce que**
le dispositif d'encliquetage est monté essentiellement au milieu de la face arrière, les languettes d'encliquetage étant situées à distance des arêtes de bordure de la face arrière.

13. Boitier de barrière lumineuse conforme à l'une des revendications 9 et 10,
**caractérisé en ce que**
le dispositif d'encliquetage (320) comporte plusieurs languettes d'encliquetage (321) qui sont réalisées pour entourer deux bords opposés essentiellement parallèles (228) du portail ou du dispositif de retenue, sur les faces tournées l'une vers l'autre desquelles est respectivement formé au moins un talon d'encliquetage (321), et qui peuvent être déplacés élastiquement en s'éloignant l'une de l'autre pour permettre l'encliquetage.

14. Boitier de barrière lumineuse conforme à la revendication 13,
**caractérisé en ce que**
les languettes d'encliquetage sont situées à proximité des arêtes de bordure de la face arrière (72).

15. Elément de barrière lumineuse (12) réalisé sous la forme d'un module d'émission et/ou de réception d'une barrière lumineuse pour permettre de surveiller une fermeture d'un bâtiment à actionnement automatique, comportant :
une unité photoélectrique (84) permettant de transformer un rayonnement électromagnétique en un signal électronique exploitable et/ou inversement,
**caractérisé par**
un boitier de barrière lumineuse (68) conforme à l'une des revendications précédentes dans lequel est logée l'unité photoélectrique (84), cette unité photoélectrique pouvant être raccordée au moyen d'un branchement de câbles (86) situé sur le boitier de barrière lumineuse (68) à une unité d'alimentation, de commande et/ ou d'exploitation.

16. Elément de barrière lumineuse conforme à la revendication 15,
caractérisé en qu'
il est réalisé par la technique à deux fils et le branchement de câbles est réalisé sous la forme d'un branchement à deux fils avec deux des branchements de serrage (87, 88).

17. Armoire lumineuse comportant deux éléments de barrière lumineuse (12) formant une voie de barrière lumineuse dont au moins un est réalisé conformément à la revendication 15 ou 16.

18. Barrière lumineuse conforme à la revendication 17,
**caractérisé par**
un de préférence deux câbles à deux brins (126) et par plusieurs serrages de câble (108, 110) autocollants ou comportant chacun un élément d'une liaison par encliquetage pour guider le câble de l'élément de barrière lumineuse vers une unité d'alimentation, de commande et/ou d'exploitation.

19. Portail actionné par un entrainement de portail dont le déplacement est surveillé par une armoire lumineuse conforme à la revendication 17 ou 18.

20. Dispositif d'actionnement de portail pour l'actionnement motorisé d'un portail, en particulier d'un portail de garage ou d'industrie ou d'un portail d'entrée,
**caractérisé par**
au moins un boitier de barrière lumineuse (68) conforme à l'une des revendications 1 à 15.

21. Disposition d'entrainement de portail conforme à la revendication 20,
**caractérisé par**
une barrière lumineuse avec un élément de barrière lumineuse (12) conforme à l'une des revendications 15 ou 16 pour détecter un obstacle se trouvant dans le trajet de déplacement du portail, et, en cas de détection d'un obstacle arrêter et/ ou inverser le déplacement du portail.
